(19) Europäisches Patentamt / European Patent Office / Office européen des brevets

(11) **EP 1 260 348 B1**

(12) **EUROPÄISCHE PATENTSCHRIFT**

(45) Veröffentlichungstag und Bekanntmachung des Hinweises auf die Patenterteilung:
**12.03.2008 Patentblatt 2008/11**

(51) Int Cl.:
***B29C 47/92*** *(2006.01)*     ***G01N 11/08*** *(2006.01)*
***B29K 27/06*** *(2006.01)*

(21) Anmeldenummer: **02450107.4**

(22) Anmeldetag: **30.04.2002**

(54) **Verfahren zur Anpassung eines Extrusionswerkzeuges an einen Extruder**

Method for adapting an extruder nozzle to an extruder

Procédé d'adaptation d'une filière d'extrusion à une extrudeuse

(84) Benannte Vertragsstaaten:
**AT BE CH CY DE DK ES FI FR GB GR IE IT LI LU MC NL PT SE TR**

(30) Priorität: **09.05.2001 AT 7402001**

(43) Veröffentlichungstag der Anmeldung:
**27.11.2002 Patentblatt 2002/48**

(73) Patentinhaber: **Technoplast Kunststofftechnik Gesellschaft m.b.H.**
**4563 Micheldorf (AT)**

(72) Erfinder:
- **Dorninger, Frank, Ing.**
  **A-4563 Micheldorf (AT)**
- **Fattmann, Gordon, Dipl.-Ing.**
  **32760 Detmold (DE)**
- **Krüll, Oliver**
  **40885 Ratingen (DE)**
- **Limper, Andreas, Prof. Dr.-Ing.**
  **57258 Freudenberg (DE)**
- **Schwaiger, Meinhard Dipl.-Ing.**
  **A-4040 Linz (AT)**
- **Seibel, Stefan Dipl.-Ing.**
  **33178 Kirchborchen (DE)**

(74) Vertreter: **Babeluk, Michael**
**Patentanwalt**
**Mariahilfer Gürtel 39/17**
**1150 Wien (AT)**

(56) Entgegenhaltungen:
**EP-A- 0 347 055       EP-A- 0 899 556**
**EP-A- 1 022 556       WO-A-00/10794**
**WO-A-01/32397       WO-A-96/14930**
**DD-A- 294 090       DE-A- 19 741 674**
**US-A- 4 213 747**

- **GOETTFERT A: "NEUES KONZEPT ZUR ON-LINE-RHEOMETRIE IN ECHTZEIT" KUNSTSTOFFE, CARL HANSER VERLAG. MUNCHEN, DE, Bd. 81, Nr. 1, 1991, Seiten 44-47, XP000219580 ISSN: 0023-5563**
- **FRITZ H G ET AL: "SENSORENTWICKLUNG UND AUTOMATISIERUNGSTENDENZEN BEI DER KUNSTSTOFFAUFBEREITUNG" KUNSTSTOFFE, CARL HANSER VERLAG. MUNCHEN, DE, Bd. 79, Nr. 9, 1. September 1989 (1989-09-01), Seiten 785-790, XP000175031 ISSN: 0023-5563**

**EP 1 260 348 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Anpassung eines Extrusionswerkzeugs an einen Extruder.

Extruder zur Erzeugung von Kunststoffprofilen, wie sie beispielsweise für die Herstellung von Kunststofffenstern benötigt werden, sind üblicherweise so aufgebaut, dass an den Extruderzylinder, in dem die Schnekken angeordnet sind, ein Adapterteil anschließt, der den Übergang zur Extrusionsdüse bildet. In der Extrusionsdüse, dem sogenannten Extrusionswerkzeug, wird der Querschnittsverlauf des betreffenden Profils bereits weitgehend ausgeformt, um in der anschließenden Trocken- und/oder Nasskalibrierung endgültig festgelegt zu werden. Um die Produktivität des Extrusionsvorganges zu steigern, wird zunehmend mit immer höheren Extrusionsgeschwindigkeiten gearbeitet. Gleichzeitig steigen die Qualitätsanforderungen an die hergestellten Profile. Eine hohe Qualität der Profile kann jedoch bei höheren Extrusionsgeschwindigkeiten nur bei extrem sorgfältiger Abstimmung der Extrusionswerkzeuge bei gleichzeitiger Einhaltung eines genau definierten Betriebszustandes im Extruder erreicht werden. Eine solche Abstimmung ist jedoch stets nur für ein genau definiertes Rohmaterial gültig.

Um den Betriebszustand des Extruders zu erfassen, ist es bekannt, im Bereich des Adapterteils den Druck und die Temperatur der Schmelze zu erfassen. Zu diesem Zweck wird beispielsweise ein Drucksensor und ein Temperatursensor im Bereich des Fließkanals der Schmelze angeordnet. Dies ermöglicht die Erfassung des Betriebszustandes des Extruders. Bei der Produktion eines neuen Extrusionswerkzeugs wird beim Hersteller des Extrusionswerkzeuges die Abstimmung durchgeführt. Dabei wird so vorgegangen, dass dem Extrusionswerkzeug ein Extruder vorgeschaltet wird, der baugleich oder zumindest ähnlich dem Extruder ist, mit dem das Extrusionswerkzeug nach Auslieferung beim Kunden betrieben wird. Wesentlich für die Abstimmung ist auch die Verwendung des gleichen Grundmaterials wie beim späteren Produktionseinsatz.

Es hat sich nun herausgestellt, dass bei hohen Extrusionsgeschwindigkeiten oder bei der Extrusion von Profilen mit geringen Wandstärken sowie generell bei hohen Anforderungen an die Qualität des Profils, etwa bei engen Toleranzen, durchaus selbst bei optimaler Abstimmung eines Extrusionswerkzeuges beim Hersteller nach Auslieferung des Extrusionswerkzeuges beim Kunden nur unbefriedigende Ergebnisse erzielt werden. Eine Ursache dafür ist offensichtlich, dass selbst baugleiche Extruder geringfügige Unterschiede aufweisen, die beispielsweise durch Herstellungstoleranzen, Verschleiß oder dergleichen bedingt sind. Die Erfinder der vorliegenden Erfindung haben erkannt, dass solche Unterschiede sogar dann vorliegen können, wenn die Messungen im Adapterteil identische Werte für Temperatur und Druck zeigen. Dies hat nach Ansicht der Erfinder mit der Tatsache zu tun, dass die rheologischen Eigenschaften der Kunststoffschmelze mit den Parametern Druck und Temperatur allein nicht ausreichend beschrieben werden können. Eine Folge dieser Tatsache ist, dass nach Aufbau des Extrusionswerkzeugs beim Kunden aufwendige Abstimmungsfahrten durchgeführt werden müssen, bei denen versucht wird, durch Änderungen der Extrusionsbedingungen, wie etwa Schneckendrehzahl, Heizleistung und dergleichen, festgestellte Mängel des Profils zu beseitigen. Da es sehr schwierig ist herauszufinden, welche Abweichung für das Auftreten eines bestimmten Mangels, wie etwa eine verschlechterte Oberflächenqualität in einem bestimmten Teilbereich des Profils, verantwortlich ist, sind solche Arbeiten langwierig und mühsam.

Weiters ist es bekannt, an einen Extruder sogenannte Rheometerdüsen anzuflanschen, die beispielsweise als Schlitzdüsen ausgebildet sind. Die auf diese Weise gewonnenen Materialdaten haben sich jedoch insbesondere bei dem Werkstoff PVC als nicht übermäßig aussagekräftig für den tatsächlichen Extrusionsvorgang erwiesen, das heißt, dass eine Feinjustierung aufgrund der so gewonnenen Daten nicht möglich ist.

Aus der DE 36 42 757 A ist eine Messvorrichtung bekannt, bei der rheologische Eigenschaften eines Extrusionsmaterials durch Messung des Druckabfalls im Hauptstrom durchgeführt werden. Ein solches Verfahren ist möglich, wenn von einem Extruder Leitungen von einzelnen Spinndüsen ausgehen. Bei Extrusionsvorrichtungen, bei denen an einen Extruder direkt ein Extrusionswerkzeug anschließt sind solche Messverfahren jedoch nicht in befriedigender Weise einsetzbar.

Die EP 0 899 556 A betrifft eine Messvorrichtung, bei der Messungen anhand eines Materialstroms durchgeführt werden, der direkt aus dem Extruder gewonnen wird. Es hat sich jedoch herausgestellt, dass auf diese Weise Messergebnisse erhalten werden, die von geringer Aussagekraft sind.

Die WO 96/14930 A zeigt ein Verfahren zur Überwachung eines Extrusionsprozesses. Besondere Maßnahmen für die Anpassung an sich ändernde Bedingungen werden in dieser Druckschrift jedoch nicht beschrieben.

Der Artikel GÖTTFERT: "Neues Konzept zur On-line-Rheometrie in Echtzeit" in Kunststoffe, Band 81, Nr. 1, Seiten 44ff zeigt die Gewinnung von Fließkurven in Zusammenhang mit Extrusionsprozessen. Auch hier wird dem Fachmann keine Handlungsanweisung gegeben, wie eine Anpassung an geänderte Bedingungen bei optimierter Verfahrensführung erreicht werden kann.

Eine Aufgabe der vorliegenden Erfindung ist es, durch ein möglichst einfaches Verfahren die Anpassung eines Werkzeugs an einen anderen Extruder zu ermöglichen. Bei diesem Extruder kann es sich im Prinzip um einen baugleichen Extruder handeln, der sich im Betrieb nicht zwangsläufig gleich verhalten muss, oder um einen unterschiedlich ausgebildeten Extruder.

Eine weitere Aufgabe der vorliegenden Erfindung ist es, auf möglichst einfache Weise bei einer Änderung des Rohmaterials ein Extrusionssystem mit einem Extruder und einem Extrusionswerkzeug an das neue Rohmaterial anzupassen.

Die erste Aufgabe wird erfindungsgemäß gelöst, durch Aufnahme mindestens einer Master-Fließkurve an einem ersten Extruder, auf den das Extrusionswerkzeug optimiert ist, bei der der Volumenstrom über dem Druck aufgetragen ist, welche Master-Fließkurve an einem Messkanal gewonnen wird, der am Extruder, am Extrusionswerkzeug oder an einem dazwischenliegenden Adapterteil vom Fließkanal abzweigt, und die wiederholte Aufnahme von Fließkurven an den selben oder an gleichen Messkanälen wie beim ersten Extruder nach Montage des Extrusionswerkzeugs an dem zu überprüfenden und justierenden Extruder und gezielte Veränderung von Verfahrensparametern so lange, bis die Fließkurven mit den Master-Fließkurven innerhalb vorbestimmter Toleranzbereiche übereinstimmen.

Die zweite Aufgabe wird erfindungsgemäß gelöst, durch Aufnahme mindestens einer Master-Fließkurve an einem ersten Extrusionssystem, das auf das Rohmaterial optimiert ist, bei der der Volumenstrom über dem Druck aufgetragen ist, welche Master-Fließkurve an einem Messkanal gewonnen wird, der am Extruder, am Extrusionswerkzeug oder an einem dazwischenliegenden Adapterteil vom Fließkanal abzweigt, und wiederholte Aufnahme von Fließkurven an den selben oder an gleichen Messkanälen wie beim ersten Rohmaterial nach Durchführung von Extrusionsversuchen mit dem zu untersuchenden Rohmaterial und gezielte Veränderung von Verfahrensparametern so lange, bis die Fließkurven mit den Master-Fließkurven innerhalb vorbestimmter Toleranzbereiche übereinstimmen.

Beiden Verfahren ist gemeinsam, dass ausgehend von einem Zustand optimaler Abstimmung eines Systems, das aus drei Hauptbestandteilen besteht, nämlich Extruder, Extrusionswerkzeug und Rohmaterial, ein neues System, bei dem einer der Hauptbestandteile verändert ist, rasch und einfach wieder in einen Zustand optimaler Abstimmung gebracht werden kann. Im ersten Fall ist dies der Austausch des Extruders, und im zweiten Fall ist dies der Wechsel des Rohmaterials. Im Extremfall können auch zwei Hauptbestandteile, nämlich Extruder und Rohmaterial gleichzeitig verändert sein.

Es hat sich herausgestellt, dass die große Komplexität der Einstellung eines Extrusionssystems unter anderem darauf zurückzuführen ist, dass die rheologischen Materialeigenschaften der Kunststoffschmelze in einem bestimmten Zeitpunkt unter anderem von der zuvor erfolgten Verformung, der sogenannten Schervorgeschichte abhängen. Aufgrund des äußerst komplexen Viskositätsverhaltens der verwendeten PVC-Materialien können aus einer Druck- und Temperaturmessung allein eine rheologische Beschreibung des Materialverhaltens im Schmelzestrom nicht abgeleitet werden. Mit der gegenständlichen Erfindung wird aber gerade darauf besonders Rücksicht genommen. Überraschenderweise hat sich gezeigt, dass die Aufnahme einer Fließkurve einen Fingerabdruck des Materials zu einem bestimmten Zeitpunkt ergibt, der so aussagekräftig ist, dass das Verhalten im Werkzeug prognostiziert werden kann. Dies bedeutet, dass dann, wenn die Fließkurve für zwei unterschiedliche Extruder oder für zwei unterschiedliche Materialien gleich ist, ein weitgehend gleiches Verhalten im Werkzeug erwartet werden kann. Eine besonders gute Übereinstimmung kann erreicht werden, wenn zwei oder mehr Fließkurven, die unterschiedlichen Messkanälen zugeordnet sind, verglichen werden.

Der Vorteil der gegenständlichen Erfindung besteht darin, dass mit einer verhältnismäßig einfachen und kleinen Einrichtung das Viskositätsverhalten der Kunststoffschmelze in einem jeweils stationären, unveränderten Betrieb des Extrusionssystems unter Produktionsbedingungen in einem abgezweigten Schmelzestrom untersucht wird, dessen Zuströmkanal mit einer variablen Drossel versehen ist, derart, dass der abgezweigte Schmelzestrom mit verändertem Schmelzedruck durch eine speziell ausgeführte Kapillare führbar ist.

In einer besonders bevorzugten Ausführungsvariante der Erfindung ist vorgesehen, dass der Messkanal einen Zufuhrabschnitt, eine Messkammer und mindestens eine stromabwärts der Messkammer angeordnete Kapillare aufweist, und dass der Druckaufnehmer im Bereich der Messkammer angeordnet ist. Auf diese Weise können die Messungenauigkeiten minimiert werden.

Eine besonders einfache Auswertung der Messergebnisse ist möglich, wenn mindestens zwei Kapillaren vorgesehen sind, deren Verhältnis von Länge zu Durchmesser näherungsweise gleich ist. Zusätzlich dazu kann vorgesehen sein, dass mindestens eine Kapillare vorgesehen ist, deren Länge kleiner ist als der zweifache Durchmesser, wobei diese Kapillare vorzugsweise verschließbar ausgeführt ist. Auf diese Weise kann der Einlaufdruckverlust in die Kapillare im Wesentlichen unabhängig vom Druckverlust in der Kapillare bestimmt werden, so dass es möglich ist, den Einfluss des Einlaufs in die Kapillare herauszurechnen.

In der Folge wird die Erfindung anhand der in den Figuren dargestellten Ausführungsbeispiele näher erläutert. Es zeigen

Fig. 1    schematisch eine erste Ausführungsvariante einer Vorrichtung zur Durchführung des erfindungsgemäßen Verfahrens,

Fig. 2    ein Detail einer weiteren Ausführungsvariante einer solchen Vorrichtung,

Fig. 3    eine weitere Ausführungsvariante einer solchen Vorrichtung,

Fig. 4    einen Querschnitt durch die Vorrichtung im Bereich der Kapillaren bei einer weiteren Ausführungsvariante der Vorrichtung,

Fig. 5        einen Schnitt nach Linie V - V in Fig. 4,

Fig. 6        einen Schnitt nach Linie VI - VI in Fig. 4 und

Fig. 7 und 8    Diagramme zur Erklärung der Fließkurven.

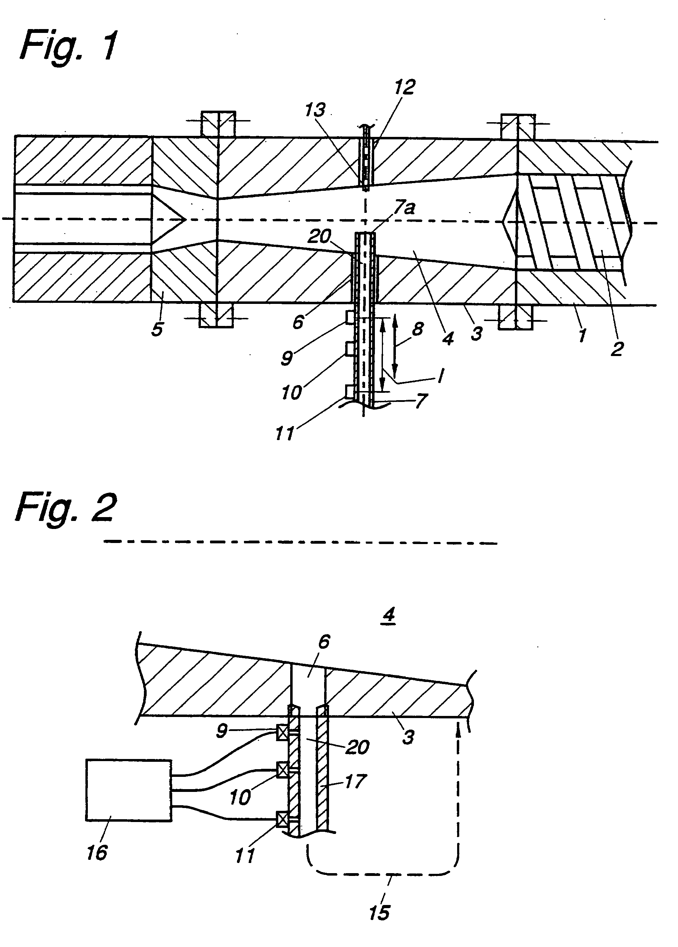

In der Fig. 1 ist schematisch der stromabwärtige Teil eines Extrusionszylinders 1 mit darin angeordneten Schnecken 2 dargestellt. An den Extrusionszylinder 1 ist ein Adapterteil 3 angeschraubt, der einen sich in Extrusionsrichtung verjüngenden Fließkanal 4 aufweist. Gegebenenfalls kann der Adapterteil mehrteilig ausgebildet sein. Im Fließkanal 4 wird die Kunststoffschmelze homogenisiert, und der Querschnitt verändert sich kontinuierlich von der brillenförmigen Öffnung am Ausgang des Extruderzylinders zu einem runden Querschnitt. An den Adapterteil 4 schließt die Extrusionsdüse 5 an, in der die eigentliche Querschnittsform des zu erzeugenden Profils ausgebildet wird. Im mittleren Abschnitt des Adapterteils 3 ist eine radial ausgerichtete Bohrung 6 vorgesehen, in der ein Rohr 7 in Axialrichtung (Doppelpfeil 8) beweglich geführt ist, in dem ein Messkanal 20 mit rechteckigem Querschnitt ausgebildet ist. Dadurch wird erreicht, dass die vordere Öffnung 7a des Rohres 7 unterschiedlich weit in den Fließkanal 4 des Adapterteils 3 eindringt. Zur Verdeutlichung der Darstellung ist die Dicke des Rohres 7 übertrieben dargestellt. Während des Messvorgangs wird durch den Messkanal 20 kontinuierlich Kunststoffschmelze aus dem Fließkanal 4 herausgeführt. Außerhalb des Adapterteils 3 sind an dem Rohr 7 ein erster Druckaufnehmer 9, ein Temperatursensor 10 und ein weiterer Druckaufnehmer 11 angeordnet. Die beiden Druckaufnehmer sind in einem Abstand I von etwa 100 mm angeordnet. Durch diese Messgeräte kann der Verlauf sowohl der Temperatur als auch des Drucks über den Querschnitt des Fließkanals 4 bestimmt werden. Besonders vorteilhaft ist jedoch, dass die Viskosität der Kunststoffschmelze nicht nur indirekt über Druck, Temperatur und die bekannten Materialeigenschaften bestimmt werden kann, sondern auch direkt aus dem ermittelten Druckabfall zwischen dem ersten und dem weiteren Druckaufnehmer 9 bzw. 11 berechnet werden kann.

In einer weiteren Bohrung 12 ist in herkömmlicher Weise ein weiterer Temperatursensor 13 angeordnet, der zusätzlich laufend die Temperatur an einem vorbestimmten Punkt des Fließkanals 4 erfasst.

Bei der Ausführungsvariante von Fig. 2 ist ein Rohr 17 mit einem Messkanal 20 direkt in eine Bohrung 6 des Adapterteils 3 eingeschraubt, um so mit dem Fließkanal 4 in Verbindung zu stehen. Die Druckaufnehmer 9 und 11 und der Temperatursensor 10 stehen mit einer schematisch angedeuteten Einrichtung 16 zur Auswertung und Anzeige der Messergebnisse in Verbindung. Mit 15 ist schematisch eine Möglichkeit gekennzeichnet, die zur Rückführung der durch den Messkanal 20 abgezogenen Schmelze in den Extruder dient. Dazu wird es jedoch im allgemeinen erforderlich sein, den Messkanal in den Adapterteil zu integrieren.

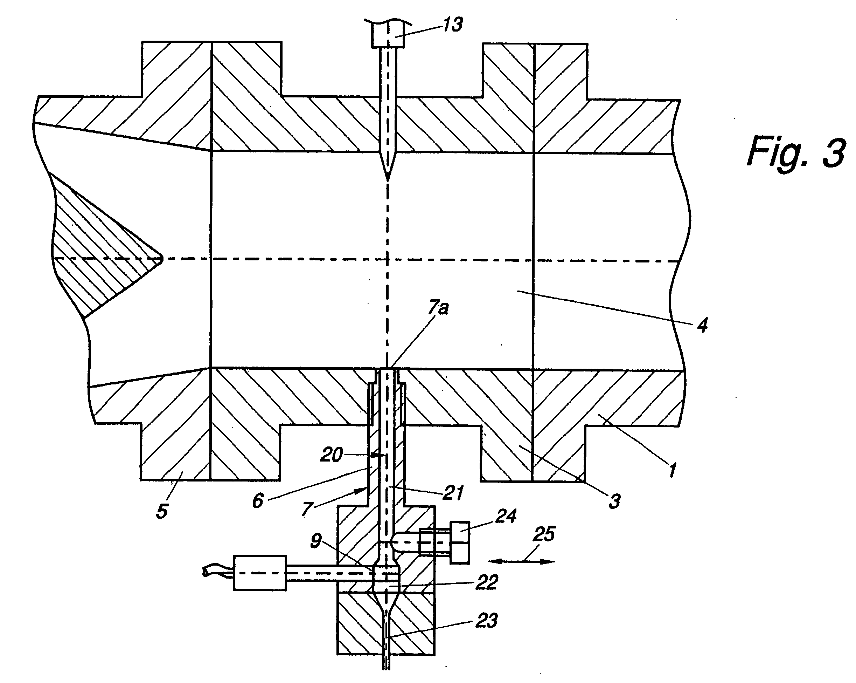

Bei der Ausführungsvariante der Fig. 3 besteht der Messkanal 20 aus einem Zufuhrabschnitt 21, einer Messkammer 22 und einer Kapillare 23, die stromabwärts der Messkammer 22 angeordnet ist. Ein Druckaufnehmer 9 ist im Bereich der Messkammer 22 angeordnet. Stromaufwärts der Messkammer 22 ist im Zufuhrabschnitt 21 eine einstellbare Drossel 24 vorgesehen, durch die der Zuströmquerschnitt verändert werden kann. Die Drossel 24 besteht aus einer Zunge, die in Richtung des Doppelpfeils 25 beweglich im Rohr 7 angeordnet ist.

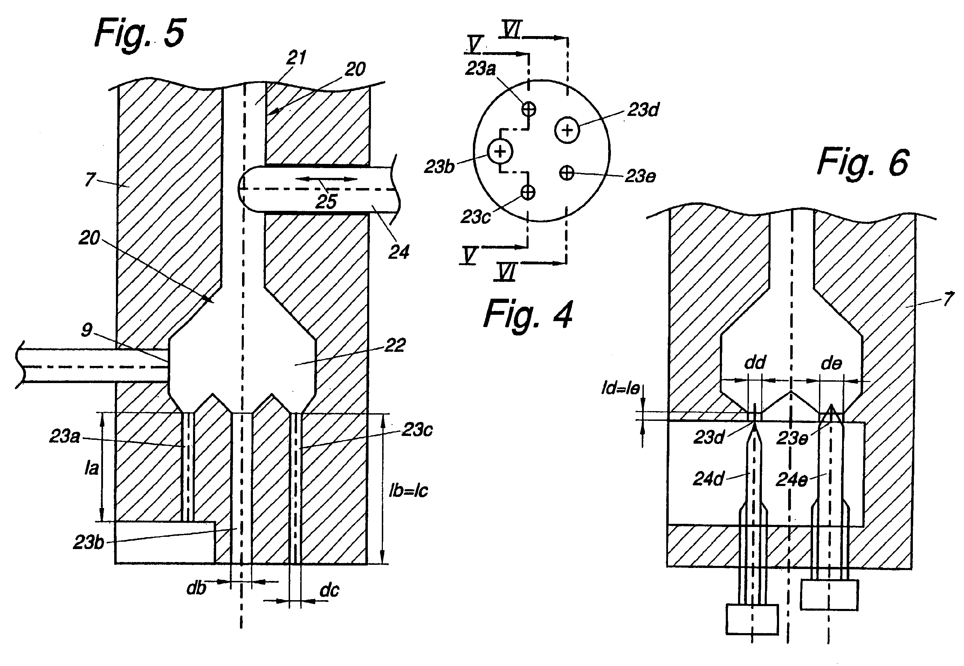

Die Ausführungsvariante der Fig. 4 bis 6 entspricht im Wesentlichen der von Fig. 3 mit dem Unterschied, dass insgesamt fünf Kapillaren 23a, 23b, 23c, 23d und 23e vorgesehen sind. Die Längen und Durchmesser der einzelnen Kapillaren werden entsprechend der folgenden Tabelle gewählt:

| Kapillare | Länge (mm) | | Durchmesser (mm) | |
|-----------|------------|-----|------------------|---|
| 23a | la | 30 | da | 2 |
| 23b | lb | 45 | db | 3 |
| 23c | lc | 45 | dc | 2 |
| 23d | ld | 1 | dd | 2 |
| 23e | le | 1 | de | 3 |

Es ist zu beachten, dass das Verhältnis von Länge zu Durchmesser sowohl bei der ersten, als auch bei der zweiten Kapillare etwa gleich ist, das heißt, es gilt

$$la/da = lb/db = 15$$

Da auf diese Weise analoge Verhältnisse hinsichtlich der Schubspannung geschaffen werden, kann ein etwaiges Wandgleiten durch Vergleich der Messkurven leicht erfasst und quantifiziert werden.

Weiters kann ersehen werden, dass die Längen der vierten und der fünften Kapillare 23d und 23e in der Größenordnung des Durchmessers liegen. Auf diese Weise wird der Strömungswiderstand durch die Kapillaren primär vom Einlaufdruckverlust bestimmt. Da die Durchmesser dd, de dieser beiden Kapillaren 23d, 23e den Durchmessern da, db, dc der ersten drei Kapillaren 23a, 23b, 23c entsprechen, kann auf diese Weise auch der Druckverlust in den Kapillaren ohne den Einströmdruckverlust bestimmt werden.

Die Kapillaren 23d und 23e sind durch Schrauben 24d und 24e verschließbar, um im stationären Betrieb den Materialverlust gering halten zu können. Weiters kann durch das Verschließen der Kapillaren 23d und 23e eine mögliche Beeinflussung der übrigen Kapillaren 23a, 23b und 23c vermieden werden.

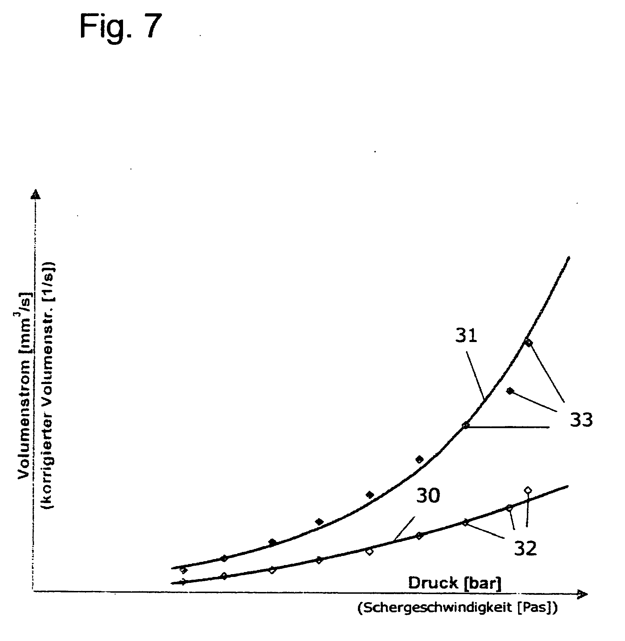

In Fig. 7 ist ein Diagramm dargestellt, das zwei Fließkurven 30, 31 zeigt, die aus jeweils neun Messpunkten 32, 33 bestehen und die aus Messkanälen mit unterschiedlichen Kapillaren gewonnen werden. Dabei kann es sich selbstverständlich auch um Master-Fließkurven handeln, sofern diese am ursprünglichen, bereits optimierten System aufgezeichnet werden. Jeder Messpunkt 32, 33 der Fließkurven 30, 31 wird bei einer bestimmten Stellung der veränderlichen Drossel 24 gewonnen, bei dem sich ein bestimmter Volumenstrom und ein bestimmter Druck einstellt.

Um die Vergleichbarkeit zu verbessern kann der Volumenstrom normiert werden, um einen korrigierten Volumenstrom zu erhalten, der in 1/s angegeben ist. In gleicher Weise kann der Druck normiert werden, um die Schergeschwindigkeit zu erhalten.

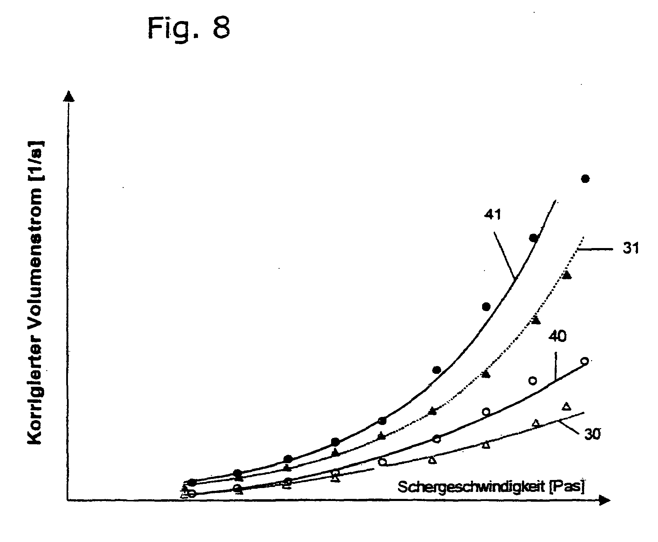

In der Fig. 8 sind zwei Master-Fließkurven 40, 41 und die zugehörigen Fließkurven 30, 31 des veränderten Systems dargestellt. Die Fließkurven 30, 31 bzw. 40, 41 können in Übereinstimmung gebracht werden, indem verschiedene Verfahrensparameter verändert werden. So führt beispielsweise eine Temperaturerhöhung zu einer Verschiebung der Fließkurven 30, 31 bzw. 40, 41 nach oben. Die Form der Fließkurven 30, 31 bzw. 40, 41 kann durch subtilere Maßnahmen, wie die Zylindertemperierung oder die Dosierung des Materials beeinflusst werden. Wenn mit diesen Maßnahmen nicht das Auslangen gefunden werden kann, wird als zu verändernder Verfahrensparameter die Extruderschnecke verändert, indem diese bearbeitet oder ausgetauscht wird. In gleicher Weise kann als zu verändernder Verfahrensparameter die Rezeptur des Rohmaterials verändert werden.

Durch das erfindungsgemäße Verfahren und die erfindungsgemäße Einrichtung kann die Abstimmung von Extrusionswerkzeugen wesentlich vereinfacht werden und damit schneller und auch von weniger erfahrenem Personal durchgeführt werden.

## Patentansprüche

**1.** Verfahren zur Anpassung eines Extrusionssystems mit einem Extruder und einem an dem Extruder angeordneten Extrusionswerkzeug an einen neuen Extruder, wobei zunächst am ursprünglichen optimierten System mit dem ursprünglichen Rohmaterial, auf das das System optimiert ist, mindestens eine Master-Fließkurve (40, 41) aufgenommen wird, bei der der Volumenstrom im Messkanal (20) über dem Druck aufgetragen ist, welche Master-Fließkurve (40, 41) an einem Messkanal (20) gewonnen wird, der am Extruder, am Extrusionswerkzeug oder an einem dazwischen liegenden Adapterteil vom Fließkanal (4) abzweigt, und wiederholte Aufnahme von Fließkurven (30, 31) gleichen Messkanälen (20) wie beim ersten Extruder nach Montage des Extrusionswerkzeugs an dem zu überprüfenden und zu justierenden Extruder und gezielte Veränderung von Verfahrensparametern so lange, bis die Fließkurven (30, 31) mit der Master-Fließkurve (40, 41) innerhalb vorbestimmter Toleranzbereiche übereinstimmen.

**2.** Verfahren zur Anpassung eines Extrusionssystems mit einem Extruder und einem an dem Extruder angeordneten Extrusionswerkzeug an ein neues Rohmaterial, wobei zunächst am ursprünglichen optimierten System mit dem ursprünglichen Rohmaterial, auf das das System optimiert ist, mindestens eine Master-Fließkurve (40, 41) aufgenommen wird, bei der der Volumenstrom im Messkanal (20) über dem Druck aufgetragen ist, welche Master-Fließkurve (40, 41) an einem Messkanal (20) gewonnen wird, der am Extruder, am Extrusionswerkzeug oder an einem dazwischen liegenden Adapterteil vom Fließkanal (4) abzweigt, und wiederholte Aufnahme von Fließkurven (30, 31) gleichen Messkanälen (20) wie beim ersten Rohmaterial bei Durchführung von Extrusionsversuchen mit dem zu überprüfenden Rohmaterial, und gezielte Veränderung von Verfahrensparametern so lange, bis die Fließkurven (30, 31) mit der Master-Fließkurve (40, 41) innerhalb vorbestimmter Toleranzbereiche übereinstimmen.

**3.** Verfahren nach Anspruch 1 oder 2, **dadurch gekennzeichnet, dass** als zu verändernde Verfahrensparameter die Schneckendrehzahl des Extruders, die Dosierdrehzahl, der Dosiergrad, die Schneckentemperierung und die Zylindertemperierung verändert werden.

**4.** Verfahren nach einem der Ansprüche 1 bis 3, **dadurch gekennzeichnet, dass** als zu verändernder Verfahrensparameter die Extruderschnecke verändert wird.

**5.** Verfahren nach einem der Ansprüche 1 bis 4, **dadurch gekennzeichnet, dass** als zu verändernder Verfahrensparameter die Rezeptur des Rohmaterials verändert wird.

**6.** Verfahren nach einem der Ansprüche 1 bis 5, **dadurch gekennzeichnet, dass** mindestens zwei Master-Fließkurven (40, 41) aufgenommen werden, indem für jede Master-Fließkurve (40, 41) ein eigener Messkanal (20) verwendet wird.

**7.** Verfahren nach einem der Ansprüche 1 bis 6, **dadurch gekennzeichnet, dass** der Messkanal (20) einen Zufuhrabschnitt, eine Messkammer (22) und mehrere Kapillaren (23a, 23b, 23c, 23d, 23e) mit unterschiedlichen Durchmessern aufweist und, dass der Druckaufnehmer im Bereich der Messkammer (22) angeordnet ist.

8. Verfahren nach Anspruch 7, **dadurch gekennzeichnet, dass** mindestens zwei Kapillaren (23a, 23b, 23c, 23d, 23e) vorgesehen sind, deren Verhältnis von Länge zu Durchmesser näherungsweise gleich ist.

9. Verfahren nach Anspruch 7 oder 8, **dadurch gekennzeichnet, dass** eine einstellbare Drossel am Messkanal (20) zwecks Aufnahme der Master-Fließkurven (40, 41) und Fließkurven (30, 31) in unterschiedliche Stellungen bringbar ist.

## Claims

1. A method for adjusting an extrusion system with an extruder and an extrusion die arranged on the extruder to a new extruder, with at least one master flow curve (40, 41) being recorded at first in the originally optimized system with the original raw material to which the system is optimized, in which curve the volume flow is entered over the pressure in the measuring channel (20), which master flow curve (40, 41) is obtained in a measuring channel (20) which branches off in the extruder, the extrusion die or in any interposed adapter part from the flow channel (4), and the repeated recording of flow curves (30, 31) in the same measuring channels (20) as in the first extruder after the assembly of the extrusion tool in the extruder to be checked and adjusted, and the purposeful change of process parameters for such a time until the flow curves (30, 31) correspond to the master flow curves (40, 41) within predetermined tolerance ranges.

2. A method for adjusting an extrusion system with an extruder and an extrusion die arranged on the extruder to a new raw material, with at least one master flow curve (40, 41) being recorded at first in the originally optimized system with the original raw material to which the system is optimized, in which curve the volume flow is entered over the pressure in the measuring channel, which master flow curve (40, 41) is obtained in a measuring channel (20) which branches off in the extruder, the extrusion die or in any interposed adapter part from the flow channel (4), and the repeated recording of flow curves (30, 31) in the same measuring channels (20) as in the first raw material after the performance of extrusion tests with the raw material to be examined, and the purposeful change of process parameters for such a time until the flow curves (30, 31) correspond to the master flow curves (40, 41) within predetermined tolerance ranges.

3. A method according to claim 1 or 2, **characterized in that** the endless screw speed of the extruder, the dosing speed, the degree of dosing, the tempering of the endless screw and the cylinder tempering are changed as the process parameter to be changed.

4. A method according to one of the claims 1 to 3, **characterized in that** the extruder screw is changed as the process parameter to be changed.

5. A method according to one of the claims 1 to 4, **characterized in that** the formulation of the raw material is changed as the process parameter to be changed.

6. A method according to one of the claims 1 to 5, **characterized in that** at least two master flow curves (40, 41) are recorded **in that** a separate measuring channel (20) is used for each master flow curve (40, 41).

7. A method according to one of the claims 1 to 6, **characterized in that** the measuring channel (20) comprises an inflow section, a measuring chamber (22) and several capillaries (23a, 23b, 23c, 23d, 23e) with different diameters, and that the pressure sensor is arranged in the region of the measuring chamber (22).

8. A method according to claim 7, **characterized in that** at least two capillaries (23a, 23b, 23c, 23d, 23e) are provided whose ratio of length to diameter is approximately the same.

9. A method according to claim 7 or 8, **characterized in that** an adjustable throttle on the measuring channel (20) can be brought to different positions for the purpose of recording the master flow curves (40, 41) and the flow curves (30, 31).

## Revendications

1. Procédé d'adaptation d'un système d'extrusion comprenant une extrudeuse et un outil d'extrusion installé sur l'extrudeuse pour une nouvelle extrudeuse, selon lequel
on optimise tout d'abord sur le système optimisé d'origine avec la matière brute d'origine, pour laquelle le système est optimisé, en enregistrant au moins une courbe de fluage maître (40, 41) représentant le débit volumique dans le canal de mesure (20) en fonction de la pression, on recueille cette courbe de fluage maître (40, 41) dans un canal de mesure (20) qui dérive du canal de fluage (4) au niveau de l'extrudeuse, de l'outil d'extrusion ou d'un adaptateur interposé, on répète l'enregistrement des courbes de fluage (30, 31) pour les mêmes canaux de mesure (20) que pour la première extrudeuse après le montage de l'outil d'extrusion sur l'extrudeuse à vérifier et à ajuster et on modifie les paramètres du procédé jusqu'à ce que les courbes de fluage (30, 31) coïncident avec la courbe de fluage maître (40, 41) dans une certaine plage de tolérance.

2. Procédé d'adaptation d'un système d'extrusion comprenant une extrudeuse équipée d'un outil d'extrusion pour une nouvelle matière première, selon lequel

on enregistre tout d'abord sur le système d'origine, optimisé avec la matière première d'origine, pour laquelle le système a été optimisé, pour enregistrer au moins une courbe de fluage maître (40, 41) correspondant au débit volumique dans le canal de mesure (20) en fonction de la pression,

cette courbe de fluage maître (40, 41) étant obtenue dans un canal de mesure (20) dérivant du canal de fluage (4) de l'extrudeuse, de l'outil d'extrusion ou d'un adaptateur interposé et on répète l'enregistrement des courbes de fluage (30, 31) des mêmes canaux de mesure (20) que pour la première matière première, en effectuant des essais d'extrusion avec la matière brute à vérifier et en modifiant de manière précise les paramètres de fonctionnement jusqu'à ce que les courbes de fluage (30, 31) correspondent à la courbe de fluage maître (40, 41) dans une certaine plage de tolérance.

3. Procédé selon les revendications 1 ou 2,
   **caractérisé en ce que**
   les paramètres de procédé, variables, sont la vitesse de rotation de la vis de l'extrudeuse, la vitesse de rotation de dosage, le degré de dosage, la température de la vis et la température du cylindre.

4. Procédé selon l'une des revendications 1 à 3,
   **caractérisé en ce que**
   comme paramètres de procédé, variables, on modifie la vis de l'extrudeuse.

5. Procédé selon l'une des revendications 1 à 4,
   **caractérisé en ce que**
   comme paramètres de procédé, variables, on modifie la composition de la matière première.

6. Procédé selon l'une des revendications 1 à 5,
   **caractérisé en ce qu'**
   on enregistre au moins deux courbes de fluage maître (40, 41) en utilisant un canal de mesure propre (20) pour chaque courbe de fluage maître (40, 41).

7. Procédé selon l'une des revendications 1 à 6,
   **caractérisé en ce que**
   le canal de mesure (20) comporte un segment d'alimentation, une chambre de mesure (22) et plusieurs capillaires (23a, 23b, 23c, 23d, 23e) de diamètres différents et

le capteur de pression est installé au niveau de la chambre de mesure (22).

8. Procédé selon la revendication 7,
   **caractérisé par**
   au moins deux capillaires (23a, 23b, 23c, 23d, 23e) dont le rapport entre la longueur et le diamètre est sensiblement le même.

9. Procédé selon la revendication 7 ou 8,
   **caractérisé par**
   un organe d'étranglement réglable équipant le canal de mesure (20) et que l'on met dans des positions différentes pour enregistrer les courbes de fluage maître (40, 41) et les courbes de fluage (30, 31).

## Fig. 1

## Fig. 2

*Fig. 3*

EP 1 260 348 B1

Fig. 6

Fig. 4

Fig. 5

# Fig. 7

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3642757 A
- EP 0899556 A

- WO 9614930 A

### In der Beschreibung aufgeführte Nicht-Patentliteratur

- Neues Konzept zur On-line-Rheometrie in Echtzeit. **GÖTTFERT.** Kunststoffe. vol. 81, 44ff